Europäisches Patentamt

European Patent Office

Office européen des brevets

(19)

(11) Veröffentlichungsnummer: **0 105 395**

**A2**

(12)

# EUROPÄISCHE PATENTANMELDUNG

(21) Anmeldenummer: 83109233.3

(22) Anmeldetag: 17.09.83

(51) Int. Cl.³: **F 16 B 12/46**
**F 16 B 12/14**

(30) Priorität: 30.09.82 DE 3236169

(43) Veröffentlichungstag der Anmeldung:
18.04.84 Patentblatt 84/16

(84) Benannte Vertragsstaaten:
AT BE CH FR GB IT LI LU NL SE

(71) Anmelder: Häfele KG
Postfach 160 Freudenstädter Strasse 74
D-7270 Nagold(DE)

(72) Erfinder: Nock, Hans
Forchenweg 10
D-7271 Rohrdorf(DE)

(74) Vertreter: Vogel, Georg
Hermann-Essig-Strasse 35 Postfach 105
D-7141 Schwieberdingen(DE)

(54) Vorrichtung zum Verbinden von rechtwinklig zueinander stehenden Möbelplatten.

(57) Die Erfindung betrifft eine Vorrichtung zum Verbinden von rechtwinklig zueinander stehenden Möbelplatten mit einem in eine Sacklochbohrung der ersten Möbelplatte eingesetzten, zylinderförmigen Gehäuse und mit einem an der zweiten Möbelplatte festegelegten Beschlagteil, das in eine parallel zur Mittelachse des Gehäuses verlaufenden Steckaufnahme des Gehäuses eingeführt ist und mit einem Ansatz für einen, in einer Gewindebohrung des Gehäuses verstellbaren Gewindespannbolzen versehen ist, wobei die Gewindebohrung für den Gewindespannbolzen in spitzem Winkel zur Steckaufnahme des Gehäuses steht und von derselben Seite wie die Steckaufnahme zugänglich ist.

Durch Ausbildung des Beschlagteils als L- bzw. Z-förmiger Winkel mit Ansätzen für die Gewindespannbolzen läßt sich eine wesentlich größere Spannkraft für die Eckverbindung erzielen.

EP 0 105 395 A2

Vorrichtung zum Verbinden von rechtwinklig
zueinander stehenden Möbelplatten


Die Erfindung betrifft eine Vorrichtung zum Verbinden von rechtwinklig zueinander stehenden Möbelplatten mit einem in eine Sacklochbohrung der ersten Möbelplatte eingesetzten, zylinderförmigen Gehäuse
und mit einem an der zweiten Möbelplatte festgelegten Beschlagteil,
das in eine parallel zur Mittelachse des Gehäuses verlaufenden Steckaufnahme des Gehäuses eingeführt ist und mit einem Ansatz für einen,
in einer Gewindebohrung des Gehäuses verstellbaren Gewindespannbolzen
versehen ist, wobei die Gewindebohrung für den Gewindespannbolzen in
spitzem Winkel zur Steckaufnahme des Gehäuses steht und von derselben
Seite wie die Steckaufnahme zugänglich ist.

Eine Vorrichtung dieser Art ist durch das DE-GM 18 86 649 bekannt.
Das Beschlagteil an der zweiten Möbelplatte ist dabei als Spannbolzen
ausgebildet, der in einer Sacklochbohrung der zweiten Möbelplatte
eingesetzt ist und an der Stirnfläche der zweiten Möbelplatte vorsteht. Bei dieser bekannten Vorrichtung ist die Festlegung des Spannbolzens in der zweiten Möbelplatte die Schwachstelle, welche die
Verspannkraft zwischen den beiden Möbelplatten begrenzt. Außerdem ist
diese Vorrichtung nur dort einsetzbar, wo für die Herstellung der
Verbindung die Möbelplatten in der Einsteckrichtung des Spannbolzens
in die Steckaufnahme des Gehäuses gegeneinander um mindestens den
Betrag verstellbar sind, der durch den an der zweiten Möbelplatte vorstehenden Teil des Spannbolzens gegeben ist. Diese Nachteile der bekannten Vorrichtung machen sie für den Einsatz als Bettbeschlag ungeeignet, da dafür wesentlich größere Spannkräfte aufzubringen sind und die gegenseitige Verstellbarkeit der Möbelplatten, nämlich der Seitenwangen und des Kopfteiles bzw. Fußteiles, nicht an allen Ecken mehr möglich ist.

Es ist Aufgabe der Erfindung, eine Vorrichtung der eingangs erwähnten Art zu schaffen, die wesentlich größere Spannkräfte zwischen den miteinander zu verbindenden Möbelplatten aufbringen kann und die dennoch keine großen Einführverstellbewegungen für die Möbelplatten erfordert.

Diese Aufgabe wird nach der Erfindung durch die in den kennzeichnenden Teilen der nebengeordneten Ansprüche aufgeführten Merkmale in äquivalenter Weise gelöst.

Das als Winkel ausgebildete Beschlagteil kann in der anliegenden Stellung der beiden Möbelplatten eingeführt, festgelegt und gespannt werden. Dabei wird das Steckteil des neuen Schenkels stets in die Steckaufnahme des Gehäuses in der Sacklochbohrung der ersten Möbelplatte eingeführt und mit dem Gewindespannbolzen gespannt. Der andere Schenkel kann bei einem Z-förmigen Winkel direkt mit der zweiten Möbelplatte verschraubt oder als Steckteil eines L-förmigen Winkels in die Steckaufnahme eines weiteren Gehäuses in einer Sacklochbohrung der zweiten Möbelplatte eingeführt und mit dem Gewindebolzen dieses Gehäuses gespannt werden. Da die Gehäuse großflächiger in den Möbelplatten festgelegt sind, wie die Spannbolzen der bekannten Vorrichtung, kann eine wesentlich größere Spannkraft aufgebracht werden, ohne daß sich diese Gehäuse aus den Sacklochbohrungen der Möbelplatten lösen. Der L-förmige bzw. Z-förmige Winkel der Vorrichtung ist stets in eine durch die beiden Möbelplatten gebildete Ecke einzubrin-

gen und dient gleichzeitig der zusätzlichen Versteifung der Eckverbindung, wenn der bzw. die Gewindespannbolzen angezogen werden.

Nach einer zweckmäßigen Ausgestaltung ist vorgesehen, daß das Gehäuse
als unten offener Topf ausgebildet ist, dessen Boden mit der Oberseite der ersten bzw. zweiten Möbelplatte abschließt und einen
schlitzförmigen Durchbruch als Steckaufnahme aufweist und daß die
Gewindebohrung für den Gewindespannbolzen in einem neben dem Durchbruch verdickten Bereicht des Bodens eingebracht ist. Diese Ausgestaltung hat den Vorteil, daß das Gehäuse die Sacklochbohrung im Bereich
der Sichtseite bis auf die erforderliche Steckaufnahme verschließt
und daß es als einfaches Kunststoff-Spritzgußteil mit einem einfachen
Werkzeug hergestellt werden kann.

Damit das Steckteil des Winkels bei der Verstellung des Gewindespannbolzens in die Steckaufnahme des Gehäuses eingezogen wird, muß eine
Wirkverbindung zwischen dem Ansatz des Steckteils und dem Gewindespannbolzen hergestellt werden. Dies wird in einfacher Weise dadurch
erreicht, daß der Ansatz der Steckteile des Winkels als Kante eines
Durchbruches des Schenkels ausgebildet ist. Dabei kann zweckmäßigerweise vorgesehen sein, daß die Ansätze durch Ausstanzung und Ausprägung von Teilen der Schenkel des Winkels gebildet sind, die eine
zusätzliche Aufnahme für den Gewindespannbolzen bilden. Diese Aufnahme führt das Ende des Gewindespannbolzens auf die Kante des Durchbruches zu.

Damit das so ausgebildete Steckteil des Winkels in die Steckaufnahme
des Gehäuses eingeführt werden kann, ist vorgesehen, daß die schlitzförmigen Steckaufnahmen der Gehäuse eine Erweiterung für die ausgestanzten und ausgeprägten Teile der Schenkel des Winkels aufweisen.

Eine Begrenzung der Spannbewegung wird bei einem L-förmigen Winkel
dadurch erreicht, daß der eine Schenkel des Winkels schmäler ist als der andere Schenkel, wobei der schmälere Schenkel als Steckteil und
der andere Schenkel als Endanschlag für das Steckteil ausgebildet
ist, sowie daß der eine Schenkel kürzer ist als der andere Schenkel
des Winkels und daß das Steckteil an dem anderen Schenkel schmäler
ist als der Schenkel, wobei die Absätze an dem Übergang als Endanschläge für die Spannbewegung dienen.

Ein bündiger Abschluß zwischen den Gehäusen und dem Winkel wird nach
einer Ausgestaltung dadurch erreicht, daß die Steckaufnahme diametral
ausgerichtet ist, daß der an die Steckaufnahme anschließende verdickte Boden mit der Gewindebohrung für den Gewindespannbolzen über
die Topfwand des Gehäuses vorsteht und als Einschlagrand für das
Gehäuse ausgebildet ist und daß der Einschlagrand eine Stärke aufweist, die der Stärke des Winkels entspricht.

Der Halt der Gehäuse in den Sacklochbohrungen der Möbelplatten wird
dadurch noch verbessert, daß die Topfwand des Gehäuses auf der Außenseite mit umlaufenden widerhakenartigen Ansätzen versehen ist.

Die Erfindung wird anhand von in den Zeichnungen dargestellten Ausführungsbeispielen näher erläutert. Es zeigt:

Fig. 1   in Vorderansicht einen L-förmigen Winkel für eine
Vorrichtung nach der Erfindung,

Fig. 2   den Winkel nach Fig. 1 in Seitenansicht,

Fig. 3   einen Schnitt entlang der Linie III-III der Fig. 2,

Fig. 4   in Vorderansicht einen Z-förmigen Winkel für eine
Vorrichtung nach der Erfindung,

Fig. 5  den Winkel nach Fig. 4 in Seitenansicht,

Fig. 6  in vergrößertem Schnitt eine Vorrichtung mit dem Winkel nach Fig. 1 und

Fig. 7  in Draufsicht das verwendete Gehäuse.

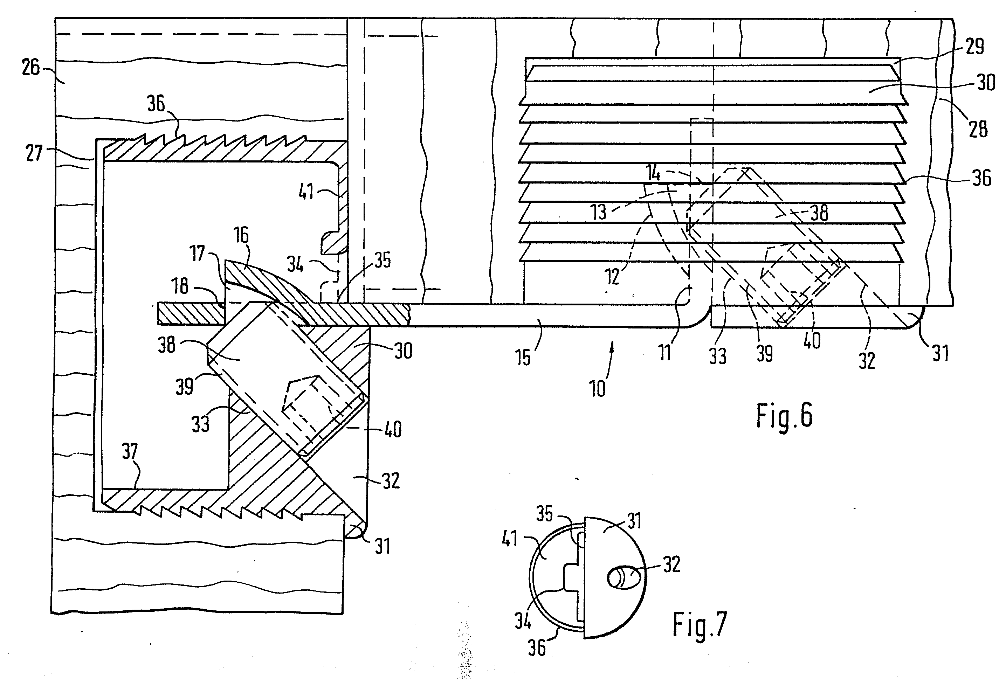

Die Vorrichtung nach der Erfindung erfordert einen Winkel 10 als Beschlagteil. Der kurze Schenkel 11 ist als Steckteil ausgebildet, das am Ende die Abschrägungen 22 trägt, um leichter in eine schlitzförmige Steckaufnahme 35 eines Gehäuses 30 nach Fig. 7 eingesteckt werden zu können. Aus dem Schenkel 11 ist das Teil 12 ausgestanzt und ausgeprägt, so daß sich eine Aufnahme 13 bildet, die den Zugang zu der als Anschlag 14 wirkenden Kante des Durchbruches im Schenkel 11 freigibt. Der Eckbereich des Winkels 10 ist durch die Sicke 23 versteift. Der längere Schenkel 15 ist am freien Ende als Steckteil ausgebildet, das schmäler ist. Die Absätze bilden Endanschläge 19, welche die Einsteckbewegung des Steckteils am Schenkel 15 begrenzen. Das Teil 16 ist ausgestanzt und ausgeprägt, so daß sich die Aufnahme 17 bildet, welche den Zugang zu der als Anschlag 18 wirkenden Kante des Durchbruches freigibt. Auch das Steckteil des Schenkels 15 ist am Ende mit Abschrägungen 21 versehen, die das Einstecken in das Gehäuse 30 erleichtern.

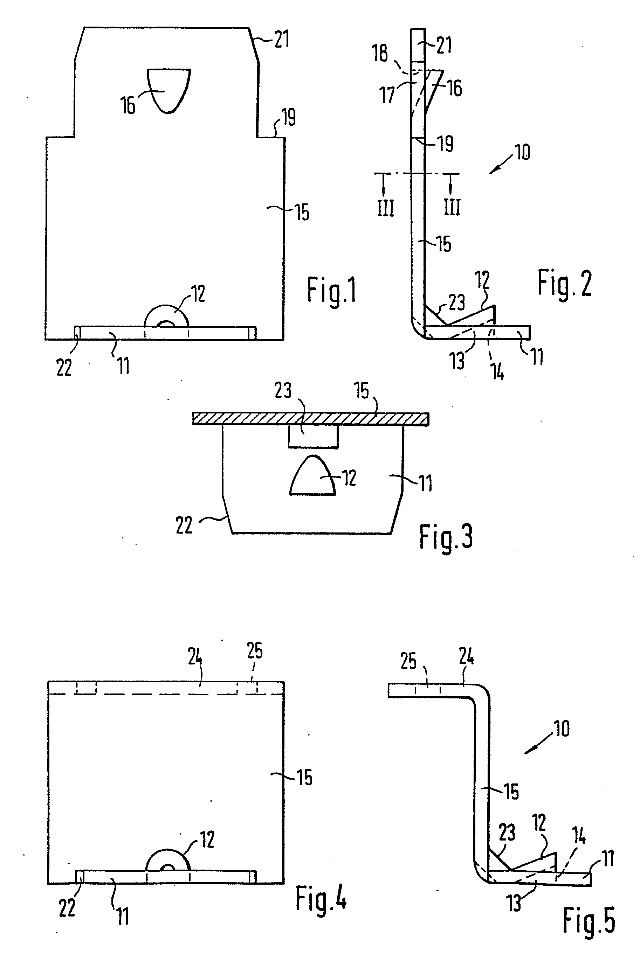

Wie der Schnitt nach Fig. 6 zeigt, kann der Winkel 10 nach den Fig. 1 bis 3 die beiden rechtwinklig zueinander stehenden Möbelplatten 26 und 28 miteinander verbinden. Dabei steht im Ausführungsbeispiel die Möbelplatte 28 mit ihrer Stirnfläche auf der Oberseite der Möbelplatte 26 auf. Jede Möbelplatte 26 bzw. 28 weist eine Sacklochbohrung 27 bzw. 29 auf, in die ein topfartiges Gehäuse 30 eingesetzt ist. Der Halt des Gehäuses 30 wird durch widerhakenartige, umlaufende Ansätze 36 verbessert. Das Gehäuse 30 ist an seiner Unterseite 37 offen und an der Oberseite mittels des Bodens 41 bis auf die schlitzförmige Steckaufnahme 35 geschlossen. Wie Fig. 7 zeigt, verläuft diese Steckaufnahme 35 etwa diametral und ist mittig mit einer Erweiterung 34
versehen, damit die an den Steckteilen des Winkels 10 ausgeprägten
Teile 12 bzw. 16 eingeführt werden können. Im Anschluß an die schlitzförmige Steckaufnahme 35 ist der Boden 41 auf einer Hälfte wesentlich
verdickt und mit der Gewindebohrung 33 für den Gewindespannbolzen 38
versehen. Dabei kann der Einführungsbereich 32 der Gewindebohrung 33
gewindelos sein. Die Achse der Gewindebohrung 33 steht im spitzen
Winkel zu der Steckrichtung der Steckaufnahme 35. Der verdickte Boden
41 ragt über die Topfwand des Gehäuses 30 vor und bildet den Einschlagrand 31, der vorzugsweise eine Stärke aufweist, die der Stärke
des Winkels 10 entspricht.

Wie Fig. 7 zeigt, wird der kurze Schenkel 11 des Winkels 10 in die
Steckaufnahme 35 des Gehäuses 30 eingeführt, das in der Sacklochbohrung 29 der ersten Möbelplatte 28 festgelegt ist. Der mit dem Außengewinde 39 versehene Gewindespannbolzen 38 dieses Gehäuses 30 wird in
dem Gewindeloch 33 verstellt, bis sein Ende an der als Anschlag 14
wirkenden Kante des Durchbruches im Schenkel 11 anliegt. Bei weiterer
Verstellung des Gewindespannbolzens 38 wird der Schenkel 11 in die
Steckaufnahme 35 eingezogen und verspannt. Der breitere Schenkel 15
des Winkels 10 begrenzt die Spannbewegung, wenn dieser an dem Boden
41 des Gehäuses 30 zur Anlage kommt.

Das Steckteil des Schenkels 15 wird in die Steckaufnahme 35 des
Gehäuses 30 eingeführt, das in der Sacklochbohrung 27 der zweiten
Möbelplatte 26 festgelegt ist. Der Gewindespannbolzen 38 dieses
Gehäuses 30 wird an der als Ansatz 18 wirkenden Kante des Durchbruches abgestützt, um bei der Verstellung das Steckteil des Schenkels
15 in die Steckaufnahme 35 des Gehäuses 30 einzuziehen. Die als
Endanschläge dienenden Ansätze 19 des Schenkels 15 begrenzen die Einzugsbewegung, wenn sie an dem Boden 41 des Gehäuses zur Anlage kommen. Der Schenkel 15 des Winkels 10 schließt bündig mit dem Einschlagrand 31 des Gehäuses 30 in der Sacklochbohrung 29 der Möbelplatte 28 ab.

Ist in der zweiten Möbelplatte 26 kein Gehäuse 30 eingesetzt, dann kann der Z-förmige Winkel 10 nach Fig. 4 und 5 verwendet werden. In der Möbelplatte 28 wird das Steckteil des Schenkels 11 in derselben Weise verspannt. Der abgewinkelte Schenkel 24 kann direkt mit der zweiten Möbelplatte 26 verschraubt werden. Dazu sind in dem abgewinkelten Schenkel 24 die Befestigungsbohrungen 25 eingebracht.

Firma
H ä f e l e KG
Freudenstädter Str. 74

7270 N a g o l d

- 1 -

Ansprüche

1. Vorrichtung zum Verbinden von rechtwinklig zueinander stehenden Möbelplatten mit einem in eine Sacklochbohrung der ersten Möbelplatte eingesetzten, zylinderförmigen Gehäuse und mit einem an der zweiten Möbelplatte festgelegten Beschlagteil, das in eine parallel zur Mittelachse des Gehäuses verlaufenden Steckaufnahme des Gehäuses eingeführt ist und mit einem Ansatz für einen, in einer Gewindebohrung des Gehäuses verstellbaren Gewindespannbolzen versehen ist, wobei die Gewindebohrung für den Gewindespannbolzen in spitzem Winkel zur Steckaufnahme des Gehäuses steht und von derselben Seite wie die Steckaufnahme zugänglich ist,

dadurch gekennzeichnet,

daß das Beschlagteil als L-förmiger Winkel (10, Fig. 1 bis 3) ausgebildet ist, dessen einer Schenkel (11) als Steckansatz mit Ansatz (14) in die schlitzförmig gestaltete Steckaufnahme (35) des Gehäuses (30) einführbar und mit dem Gewindespannbolzen (38) spannbar ist und

daß der andere Schenkel (15) des Winkels (10) als Steckteil mit Ansatz (18) in die Steckaufnahme (35) eines weiteren, in eine Sacklochbohrung (27) der zweiten Möbelplatte (26) eingesetzten
gleichen Gehäuses (30) einführbar und mittels des darin verstellbaren Gewindespannbolzens (38) spannbar ist.

2.    Vorrichtung zum Verbinden von rechtwinklig zueinander stehenden
Möbelplatten mit einem in eine Sacklochbohrung der ersten
Möbelplatte eingesetzten, zylinderförmigen Gehäuse und mit
einem an der zweiten Möbelplatte festgelegten Beschlagteil, das
in eine parallel zur Mittelachse des Gehäuses verlaufenden
Steckaufnahme des Gehäuses eingeführt ist und mit einem Ansatz
für einen, in einer Gewindebohrung des Gehäuses verstellbaren
Gewindespannbolzen versehen ist, wobei die Gewindebohrung für
den Gewindespannbolzen in spitzem Winkel zur Steckaufnahme des
Gehäuses steht und von derselben Seite wie die Steckaufnahme
zugänglich ist,
dadurch gekennzeichnet,
daß das Beschlagteil als Z-förmiger Winkel (10, Fig. 4 und 5)
ausgebildet ist, bei dem der eine abgewinkelte Schenkel (11)
als Steckteil mit Ansatz (14) in die schlitzförmig gestaltete
Steckaufnahme (35) des Gehäuses (30) einführbar ist und bei dem
der andere abgewinkelte Schenkel (24) mit Bohrungen (25) versehen ist, mittels derer der Winkel (10) mit der zweiten Möbelplatte (26) verschraubbar ist.

3.    Vorrichtung nach Anspruch1 oder 2,
dadurch gekennzeichnet,
daß das Gehäuse (30) als unten offener Topf ausgebildet ist,
dessen Boden (41) mit der Oberseite der ersten bzw. zweiten
Möbelplatte (26,28) abschließt und einen schlitzförmigen Durchbruch als Steckaufnahme (35) aufweist und
daß die Gewindebohrung (33) für den Gewindespannbolzen (38) in
einem neben dem Durchbruch verdickten Bereich des Bodens (41)
eingebracht ist.

4. Vorrichtung nach einem der Ansprüche 1 bis 3,
   dadurch gekennzeichnet,
   daß der Ansatz (14,18) der Steckteile des Winkels (10) als
   Kante eines Durchbruches des Schenkels (11,15) ausgebildet ist.

5. Vorrichtung nach Anspruch 4,
   dadurch gekennzeichnet,
   daß die Ansätze (14,18) durch Ausstanzung und Ausprägung von
   Teilen (12,16) der Schenkel (11,15) des Winkels (10) gebildet
   sind, die eine zusätzliche Aufnahme (13,17) für den Gewindespannbolzen (38) bilden.

6. Vorrichtung nach Anspruch 5,
   dadurch gekennzeichnet,
   daß die schlitzförmigen Steckaufnahmen (35) der Gehäuse (30)
   eine Erweiterung (34) für die ausgestanzten und ausgeprägten
   Teile (12,16) der Schenkel (11,15) des Winkels (10) aufweisen.

7. Vorrichtung nach einem der Ansprüche 1 und 3 bis 6,
   dadurch gekennzeichnet,
   daß der eine Schenkel (11) des Winkels (10) schmäler ist als
   der andere Schenkel (15), wobei der schmälere Schenkel (11) als
   Steckteil und der andere Schenkel (15) als Endanschlag für das
   Steckteil ausgebildet sind.

8. Vorrichtung nach einem der Ansprüche 1 bis 7,
   dadurch gekennzeichnet,
   daß der eine Schenkel (11) kürzer ist als der andere Schenkel
   (15) des Winkels (10) und
   daß das Steckteil an dem anderen Schenkel (15) schmäler ist als
   der Schenkel (15), wobei die Absätze an dem Übergang als Endanschläge (19) für die Spannbewegung dienen.

9. Vorrichtung nach einem der Ansprüche 1 bis 8,
   dadurch gekennzeichnet,
   daß die Steckaufnahme (35) diametral ausgerichtet ist,
   daß der an die Steckaufnahme (35) anschließende verdickte Boden
   (41) mit der Gewindebohrung (33) für den Gewindespannbolzen
   (38) über die Topfwand des Gehäuses (30) vorsteht und als
   Einschlagrand (31) für das Gehäuse (30) ausgebildet ist und
   daß der Einschlagrand (31) eine Stärke aufweist, die der Stärke
   des Winkels (10) entspricht.

10. Vorrichtung nach einem der Ansprüche 1 bis 9,
    dadurch gekennzeichnet,
    daß die Topfwand des Gehäuses (30) auf der Außenseite mit
    umlaufenden widerhakenartigen Ansätzen (36) versehen ist.

Fig.1

Fig.2

Fig.3

Fig.4

Fig.5

Fig.6

Fig.7